# DEMANDE DE BREVET EUROPEEN

(11) **EP 0 889 069 A1**
(43) Date de publication de la demande: **07.01.1999**
(21) Numéro de dépôt: 98401618.8
(22) Date de dépôt: 29.06.1998
(51) Int. Cl.: C08F 220/28

(54) **Polymères acryliques, solutions aqueuses de ceux-ci et leur utilisation comme fluidifiant et/ou réducteur d'eau dans des compositions à base de ciment hydraulique**

(30) Priorité: 30.06.1997 FR 9708209
(71) Demandeur: Protex International, 92300 Levallois-Perret (FR)
(72) Inventeur: Laffon, Laurent Pierre Paul, 37100 Tours (FR)
(74) Mandataire: Colas, Jean-Pierre

(57) **Abrégé**

L'invention concerne un polymère acrylique, caractérisé en ce qu'il est constitué de 51,5% à 59,5% en moles d'un ester d'hydroxyalkyle d'un acide carboxylique éthyléniquement insaturé, de 0,5% à 48% en moles d'un acide carboxylique éthyléniquement insaturé ou de son sel et de 0,5% à 48% en mole d'un acide sulfonique éthyléniquement insaturé ou de son sel.

Utilisation comme agent fluidifiant et/ou agent réducteur d'eau à effet durable dans des compositions à base de ciment hydraulique.

## Description

L'invention concerne un polymère acrylique qui permet d'augmenter de façon significative et durable la fluidité des compositions à base de ciment hydraulique.

Lorsque ce polymère est utilisé comme agent fluidifiant, il permet d'obtenir des compositions de ciment hydraulique pompables ou utilisables dans des structures fortement ferraillées. Lorsqu'il est utilisé comme agent réducteur d'eau, il permet de diminuer la teneur en eau pour l'obtention de compositions de ciment hydraulique ayant des performances mécaniques élevées.

Il est connu que certains polycondensats hydrosolubles peuvent être utilisés comme fluidifiants et/ou comme réducteurs d'eau dans des compositions à base de ciment hydraulique. Citons, par exemple les lignosulfonates, les polynaphtalènes méthylène sulfonates et les mélamines formol sulfitées. Ces additifs sont de bons agents fluidifiants et/ou de bons agents réducteurs d'eau lorsqu'ils sont fraîchement incorporés dans des compositions à base de ciment hydraulique. En revanche, leur durée d'efficacité est souvent trop faible, et il est parfois nécessaire de rajouter de l'additif juste avant la mise en oeuvre. C'est le cas typique des bétons prêts à l'emploi qui peuvent avoir des temps d'attente, entre le moment de leur fabrication et le moment de leur mise en oeuvre sur chantier, pouvant varier entre une heure et trois heures.

Il est également connu, par exemple par EP-A-97 513 et EP-A-303 747, que certains copolymères acryliques hydrosolubles ont des pouvoirs fluidifiants et/ou des pouvoirs réducteurs d'eau sur des compositions à base de ciment hydraulique. De plus, ces copolymères acryliques hydrosolubles ont l'avantage de rester efficaces dans les compositions à base de ciment hydraulique plus longtemps que les polycondensats hydrosolubles précités. Ces copolymères résultent de la copolymérisation de l'acide (méth)acrylique (ou de leurs sels) et de (méth)acrylates d'hydroxyalkyle. EP-A-97 513 décrit un copolymère constitué de 50 à 95% en mole d'acides carboxyliques éthyléniquement insaturés polymérisables et de 5 à 50% en mole d'esters d'hydroxyalkyle d'acides carboxylique éthyléniquement insaturés polymérisables. EP-A-303 747 décrit un copolymère formé de 20 à 40% en mode d'acides carboxyliques éthyléniquement insaturés polymérisables et de 60 à 80% en mole d'esters d'hydroxyalkyle d'acides carboxyliques éthyléniquement insaturés polymérisables, de poids moléculaire élevé.

Malgré toutes ces propositions, il existe encore un besoin pour un polymère acrylique amélioré et destiné à des ciments hydrauliques pour lesquels aucun additif existant n'est parfaitement adapté. En effet, chaque ciment hydraulique a des caractéristiques qui lui sont propres. Pour cette raison, aucun additif n'est vraiment universel. Un additif efficace mis au point et développé avec un ciment particulier peut ne pas avoir d'efficacité ou avoir des effets secondaires indésirables sur un ciment de classe différente ou provenant simplement d'une autre usine.

La présente invention vise à satisfaire ce besoin.

Le polymère acrylique de l'invention peut être utilisé comme agent fluidifiant et/ou comme agent réducteur d'eau dans des compositions à base de ciment hydraulique. Le polymère acrylique de l'invention a un effet fluidifiant important dès le début du malaxage des divers ingrédients de la composition à base de ciment hydraulique. De plus, la fluidification se maintient durant plusieurs heures. A certaines doses, le copolymère acrylique de l'invention ne provoque pas de retard de durcissement du ciment. Le copolymère acrylique de l'invention permet en outre, lorsqu'il est utilisé comme agent réducteur d'eau, d'améliorer les performances mécaniques des compositions à base de ciment hydraulique.

Plus précisément, l'invention concerne un polymère acrylique qui est constitué de 51,5 à 59,5% en mole d'un ester d'hydroxyalkyle d'un acide carboxylique éthyléniquement insaturé, de 0,5 à 48% en mole d'un acide carboxylique éthyléniquement insaturé ou d'un de ses sels, et de 0,5 à 48% en mole d'un acide sulfonique éthyléniquement insaturé ou d'un de ses sels.

L'invention concerne également les solutions aqueuses du polymère de l'invention et leur utilisation comme agent fluidifiant et/ou comme agent réducteur d'eau dans des compositions à base de ciment hydraulique.

De préférence, les solutions aqueuses contiennent de 10 à 50% en poids de polymère.

La structure chimique du premier monomère est représentée par la formule I suivante : 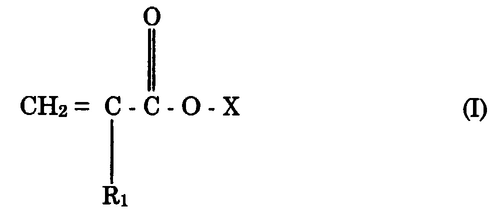 dans laquelle :
R₁ = H ou CH₃

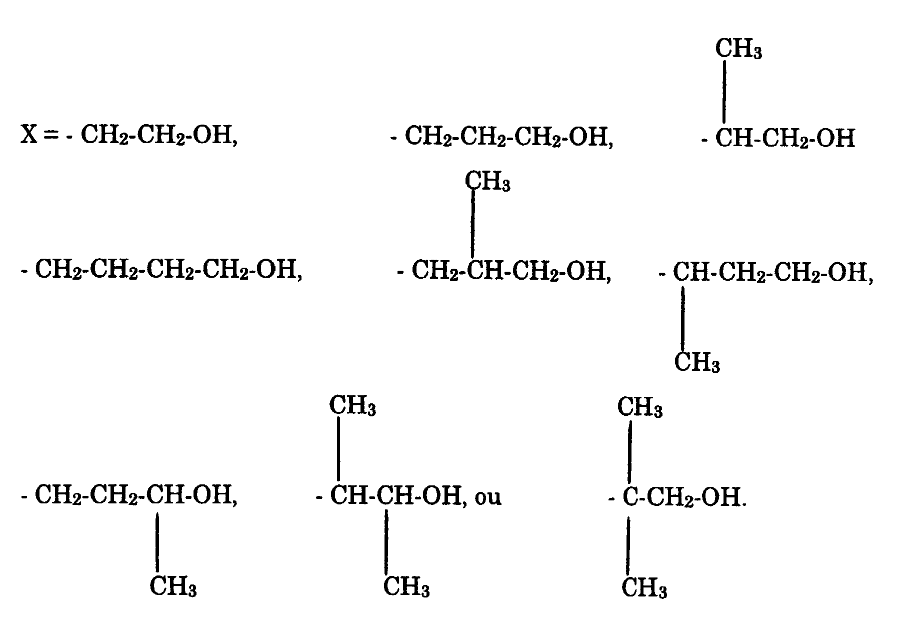

La structure chimique du second monomère est représentée par la formule II suivante : 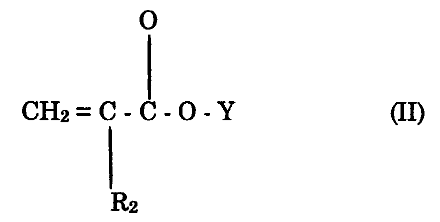 dans laquelle
R₂ = H ou CH₃
Y = H, Na ou K.

La structure chimique du troisième monomère est représentée par la formule III suivante :

CH₂ = CH - Z (III)

dans laquelle
Z = SO₃H, SO₃Na, SO₃K, C₆H₅-SO₃H, C₆H₅-SO₃Na, C₆H₅-SO₃K, ou un mélange de ceux-ci.

La structure chimique du polymère acrylique résultant est représentée par la formule IV suivante : 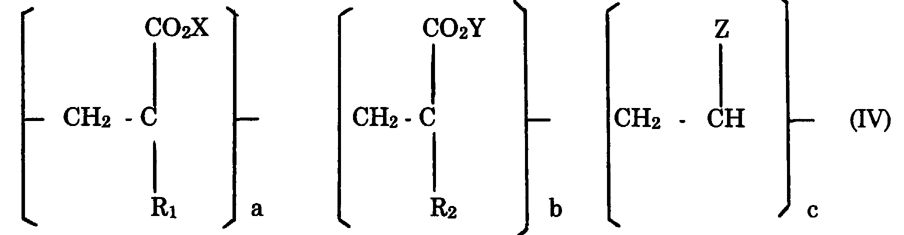 dans laquelle
a varie de 51,5 à 59,5% en mole.
b varie de 0,5 à 48,0% en mole.
c varie de 0,5 à 48,0% en mole.

Les polymères acryliques de l'invention peuvent être obtenus par polymérisation en solution aqueuse ou dans un solvant organique en utilisant les catalyseurs radicalaires conventionnels, hydrosolubles ou organosolubles selon les cas. Si la polymérisation se fait dans un solvant organique, le solvant organique choisi doit impérativement solubiliser tous les monomères mais pas forcément le polymère résultant.

Dans le cas où la polymérisation se fait dans un solvant organique, les polymère est extrait de la phase organique pour passer en phase aqueuse par adjonction d'une base neutralisante qui peut être choisie parmi l'hydroxyde de potassium ou de sodium ou parmi d'autres bases hydrosolubles.

Dans le cas où la polymérisation se fait en phase aqueuse, le polymère est solubilisé dans l'eau par adjonction d'une base neutralisante qui peut être choisie parmi l'hydroxyde de potassium ou de sodium ou parmi d'autres bases hydrosolubles.

Les polymères acryliques de l'invention font montre de toute leur efficacité lorsqu'ils sont utilisés à des doses comprises entre 0,01% et 2,5%, de préférence entre 0,05% et 1%, de matière active par rapport au poids de ciment.

Les exemples non limitatifs suivants sont donnés dans le but d'illustrer l'invention. Dans ces exemples, les pourcentages d'additifs indiqués sont des pourcentages en poids par rapport au poids de ciment.

### 1 - Evaluation du pouvoir fluidifiant sur mortier.

### Méthode utilisée pour la mise en évidence des propriétés polymères acryliques de l'invention :

### Principe de la méthode :

Un mortier standard est réalisé selon la norme français NFP 15403. La quantité d'eau de gâchage est déterminée de façon que l'affaissement du mortier témoin sans additif soit compris entre 20 et 25 mm. Les essais d'affaissement sont effectués selon la norme NFP 18451.

La composition des mortiers est la suivante :

| | |
|---|---|
| Ciment CEM I 32.5 Usine de Weiseneau | 450 g |
| Sable normal selon la norme CEN EN 196-1 | 1350 g |
| Rapport Eau/Ciment | 0,485 |
| Additif fluidifiant à tester | 0,5% |
| Désaérateur | 0,008% |

Pour effectuer l'évaluation, dix polymères acryliques ont été choisis, six d'entre eux ont des proportions de monomères qui se situent dans le domaine de l'invention. Deux autres ont des proportions de monomères qui se situent dans le domaine de EP-A-97 513, les deux derniers ont des proportions qui se situent dans le domaine de EP-A-303 747.

De plus, deux agents fluidifiants fabriqués par la Demanderesse, utilisés dans le domaine du ciment ont été choisis : un polynaphtalène méthylène sulfonate PROX MAT PLC 747 FP et une résine mélamine formol sulfitée PROX MAT M 155-40.

Le tableau I récapitule les produits évalués.

**TABLEAU I**

| Produit | Proportion des monomères en % molaire | | | Nature du polymère |
|---|---|---|---|---|
| | AHP | AA | VS | |
| Additif A | 56 | 42 | 2 | Polymère acrylique selon l'invention |
| Additif B | 56 | 39 | 5 | Polymère acrylique selon l'invention |
| Additif C | 59 | 31 | 10 | Polymère acrylique selon l'invention |
| Additif D | 55 | 25 | 20 | Polymère acrylique selon l'invention |
| Additif E | 55 | 20 | 25 | Polymère acrylique selon l'invention |
| Additif F | 58 | 10 | 32 | Polymère acrylique selon l'invention |
| Additif G | 72 | 28 | / | Copolymère acrylique selon EP-A-303 747 |
| Additif H | 78 | 22 | / | Copolymère acrylique selon EP-A-303 747 |
| Additif I | 40 | 60 | / | Copolymère acrylique selon EP-A-97 513 |
| Additif J | 30 | 70 | / | Copolymère acrylique selon EP-A-97 513 |
| Additif K | / | / | / | Polynaphtalène sulfonate (PNMS) |
| Additif L | / | / | / | Mélamine formol sulfitées (MFS) |
| AHP : Acrylate d'hydroxyéthyle | | | | |
| AA : Acide acrylique | | | | |
| VS : Vinylsulfonate de sodium | | | | |

Le Tableau II indique les valeurs de pouvoir fluidifiant initial (t = 0) et leur évolution au bout de 60 à 120 mn, des additifs du Tableau I.

**TABLEAU II**

| Produits | Affaissement en mm | | |
|---|---|---|---|
| | t = 0 | t = 60' | t = 120' |
| Additif A | 110 | 110 | 98 |
| Additif B | 110 | 110 | 99 |
| Additif C | 110 | 110 | 100 |
| Additif D | 110 | 110 | 95 |
| Additif E | 110 | 110 | 96 |
| Additif F | 110 | 110 | 100 |
| | | | |
| Additif G | 50 | 110 | 98 |
| Additif H | 30 | 110 | 99 |
| Additif I | 110 | 30 | / |
| Additif J | 110 | 25 | / |
| | | | |
| Additif K | 95 | 60 | / |
| Additif L | 60 | / | / |
| | | | |
| Témoin* | 22 | / | / |

| | | | |
|---|---|---|---|
| * : le témoin est un mortier sans additif | | | |

Les résultats du Tableau II montrent que les additifs A à F, qui sont les additifs de l'invention, sont de bons fluidifiants. En effet, leur effet est rapide puisque dès la fin du malaxage le mortier est très fluide. De plus, leur effet est durable puisqu'après deux heures le mortier est resté très fluide.

Bien que les additifs G et H aient un effet fluidifiant qui dure pendant au moins deux heures, leur effet fluidifiant est moins rapide que celui des additifs A à F. Les interactions (ciment/additif et sable/additif) s'établissent moins facilement avec les additifs G et H qu'avec les additifs A à F de l'invention.

Bien que les additifs I et J aient un effet fluidifiant qui soit aussi rapide que celui des additifs A à F de l'invention, leur effet fluidifiant est moins durable que celui des additifs A à F de l'invention.

Les additifs K et L (respectivement PNMS et MFS) ont un effet fluidifiant beaucoup moins durable que celui des additifs A à F de l'invention. Leur pouvoir fluidifiant est également inférieur à celui des additifs A à F de l'invention.

### 2 - Evaluation des performances mécaniques des mortiers.

### Méthode utilisée pour la mise en évidence des propriétés des polymères acryliques de l'invention :

### Principe de la méthode :

Un mortier standard est réalisé selon la norme français NFP 15403. La quantité d'eau de gâchage est fixée à un rapport Eau/Ciment = 0,5. Les résistances à la compression sont déterminées selon la norme CEN EN 196-1.

La composition des mortiers est la suivante :

| | |
|---|---|
| Ciment CEM IV 32.5 Usine de Villier au Boin | 450g |
| Sable normal selon la norme CEN EN 196-1 | 1350g |
| Rapport Eau/Ciment | 0,500 |
| Additif fluidifiant à tester | 0,2% |
| Désaérateur | 0,004% |

Les produits évalués sont ceux figurant dans le Tableau I.

Le Tableau III récapitule les résistances à la compression des différents mortiers additivés.

**TABLEAU III**

| Additif | Résistances à la compression en Mpa. | |
|---|---|---|
| | A 24 heures | A 7 jours |
| Additif A | 18,4 | 42,4 |
| Additif B | 17,8 | 43,7 |
| Additif C | 17,8 | 43,0 |
| Additif D | 18,1 | 41,6 |
| Additif E | 18,5 | 42,5 |
| Additif F | 17,6 | 41,0 |
| | | |
| Additif G | 16,6 | 39,4 |
| Additif H | 16,8 | 39,2 |
| Additif I | 14,2 | 44,5 |
| Additif J | 12,5 | 46,4 |
| | | |
| Témoin | 18,0 | 41,0 |

Les résultats du Tableau III, montrent que les additifs A à F de l'invention ne modifient pas les performances mécaniques du mortier aussi bien après 24 heures qu'après 7 jours de mûrissement.

Les additifs G et H ont tendance à diminuer légèrement les performances mécaniques du mortier et ce, surtout après 7 jours de mûrissement.

Les additifs I et J ont tendance à retarder le début du durcissement et ainsi de diminuer les performances mécaniques du mortier après 24 heures de mûrissement.

Il va de soi que les modes de réalisation décrits ne sont que des exemples et qu'on pourrait les modifier, notamment par substitution d'équivalents techniques, sans sortir pour cela du cadre de l'invention.

## Revendications

1. Polymère acrylique, caractérisé en ce qu'il est constitué de 51,5% à 59,5% en moles d'un ester d'hydroxyalkyle d'un acide carboxylique éthyléniquement insaturé, de 0,5% à 48% en moles d'un acide carboxylique éthyléniquement insaturé ou de son sel et de 0,5% à 48% en mole d'un acide sulfonique éthyléniquement insaturé ou de son sel.

2. Polymère acrylique de la revendication 1, caractérisé en ce que l'acide carboxylique éthyléniquement insaturé est choisi parmi l'acide acrylique et l'acide méthacrylique, sous forme acide ou sous forme de sel ou encore sous forme d'un mélange d'acide et de sel.

3. Polymère acrylique de la revendication 1, caractérisé en ce que l'ester d'hydroxyalkyle d'un acide carboxylique éthylénique ment insaturé est choisi parmi les acrylate et méthacrylate d'hydroxyéthyle, d'hydroxypropyle, et d'hydroxybutyle.

4. Polymère acrylique de la revendication 1, caractérisé en ce que l'acide sulfonique éthyléniquement insaturé est choisi parmi l'acide vinylsulfonique et l'acide styrènesulfonique., sous forme acide ou sous forme de sel ou encore sous forme d'un mélange d'acide et de sel.

5. Solution aqueuse d'un polymère acrylique de l'une quelconque des revendications 1 à 4.

6. Utilisation d'un polymère acrylique selon l'une quelconque des revendications 1 à 4 ou d'une solution aqueuse selon la revendication 5, comme agent fluidifiant et/ou comme agent réducteur d'eau à effet durable dans des compositions à base de ciment hydraulique.

7. Utilisation selon la revendication 5, caractérisée en ce que ledit polymère est utilisé à des doses comprises entre 0,01% et 2,5% de matière active par rapport au poids de ciment.

8. Utilisation selon la revendication 6, caractérisée en ce que ledit polymère est utilisé à des doses comprises entre 0,05% et 1% de matière active par rapport au poids de ciment.
